# EUROPEAN PATENT APPLICATION

(11) **EP 4 838 257 A1**
(43) Date of publication of application: **11.11.2026**
(21) Application number: 25751319.2
(22) Date of filing: 24.01.2025
(51) Int. Cl.: G01S 7/481, G01S 7/486, G01S 17/88

(54) **OPTICAL SYSTEM, DETECTION APPARATUS, AND TERMINAL**

(30) Priority: 05.02.2024 CN 202410173123
(71) Applicant: Yinwang Intelligent Technologies Co., Ltd., Shenzhen, Guangdong 518110 (CN)
(72) Inventor: ZHAO, Dongfeng, Shenzhen, Guangdong 518129 (CN)
(74) Representative: Pfenning, Meinig & Partner mbB
(86) International application number: PCT/CN2025/074519
(87) International publication number: WO 2025/167717

(57) **Abstract**

An optical system (100), a detection apparatus, and a terminal are provided. The optical system (100) includes a scanning module (101), a first prism module (102), and a receiver (103). The first prism module (102) includes one or more first prisms (1021, 1022, and 1023). The first prism module (102) includes a first incident surface and a first emergent surface. The scanning module (101) is configured to reflect a first beam, where the first beam includes a beam reflected or scattered by an object. The first prism module (102) is configured to adjust a propagation direction of the first beam reflected by the scanning module, where the first beam is incident on the first incident surface at a first incident angle, and is emitted from the first emergent surface. A refractive index of the first beam in the one or more first prisms (1021, 1022, and 1023) is related to the first incident angle. The receiver (103) is configured to receive the first beam emitted from the first prism module (102). This can compensate for a deviation angle of a propagation direction of an echo beam, and optimize detection accuracy.

## Description

This application claims priority to Chinese Patent Application No. 202410173123.9, filed with the China National Intellectual Property Administration on February 5, 2024 and entitled "OPTICAL SYSTEM, DETECTION APPARATUS, AND TERMINAL", which is incorporated herein by reference in its entirety.

### TECHNICAL FIELD

This application relates to the field of detection technologies, and specifically, to an optical system, a detection apparatus, and a terminal.

### BACKGROUND

Currently, in most lidar detection scenarios, a scanning module (for example, a scanning mirror) usually needs to be used to assist in scanning to complete detection. The scanning module not only needs to scan an emergent beam, but also needs to reflect an echo beam formed by reflection or scattering by an object. Due to continuous movement of the scanning module, after a beam is reflected by the object, an angle at which the scanning module receives the echo beam is different from an angle at which a scanning beam is emitted. As a result, an angle of a propagation direction of the echo beam is deviated after the echo beam passes through the scanning module. The angle deviation increases as a detection distance increases. For a typical single-mode optical fiber or waveguide system, the angle deviation causes a spot deviation on a focal plane of a lens, resulting in a decrease in optical energy coupled into an optical fiber or a waveguide. Consequently, detection accuracy of a lidar is affected.

### SUMMARY

This application provides an optical system, a detection apparatus, and a terminal, to compensate for a deviation angle of a propagation direction of an echo beam and optimize detection accuracy.

According to a first aspect, this application provides an optical system. The optical system includes a scanning module, a first prism module, and a receiver. The first prism module includes one or more first prisms, and the first prism module includes a first incident surface and a first emergent surface.

The scanning module is configured to reflect a first beam, where the first beam includes a beam reflected or scattered by an object.

The first prism module is configured to adjust a propagation direction of the first beam reflected by the scanning module, where the first beam is incident on the first incident surface at a first incident angle, and is emitted from the first emergent surface, and a refractive index of the first beam in the one or more first prisms is related to the first incident angle.

The receiver is configured to receive the first beam emitted from the first prism module.

For example, the first prism may be an anisotropic crystal prism. For example, the receiver includes a receiving optical fiber and a detector.

In the foregoing solution, a propagation direction of an echo beam (for example, the first beam) is adjusted by using the first prism module. Because a refractive index of the first prism in the first prism module may be adjusted by changing an incident angle of a beam, the incident angle of the beam can be properly selected, so that a beam emitted from the first prism module can meet a requirement for angle compensation in a propagation direction. In this way, an angle deviation of a propagation direction caused by the scanning module is compensated, so that optical energy of an echo beam received by the receiver can be increased, more information can be obtained, and detection accuracy can be improved. Further, the first prism is used to compensate for the angle deviation of the propagation direction caused by the scanning module. This is easy to implement and has low costs, and can result in a multiple-fold reduction in the angle deviation.

In addition, in the foregoing optical system, the first prism module may include one or more first prisms. In an implementation, because angle compensation of one first prism is limited, if an angle deviation caused by the scanning module can be compensated by using one first prism, the first prism module may include one first prism. If an angle deviation caused by the scanning module is large, one first prism cannot meet a compensation requirement. In this case, a plurality of first prisms may be used. It can be learned that, in this solution, a quantity of first prisms can be flexibly selected to meet different compensation requirements, making it widely applicable across diverse scenarios.

In a possible implementation, a polarization direction of the first beam is not perpendicular to an optical axis of the first prism. For example, refraction generated after the first beam is incident on the first incident surface is refraction of extraordinary light.

In the foregoing implementation, when the first beam is incident to the first prism, refraction that conforms to the law of refraction of extraordinary light may be generated, so that the propagation direction of the first beam can be changed by properly selecting a refractive index, to compensate for the angle deviation in the propagation direction.

In a possible implementation, when the scanning module is configured to reflect the first beam at different scanning angles, the receiver receives the first beam emitted from the first prism module.

In the foregoing implementation, because distances between objects and the scanning module are different, time required for beams reflected or scattered by the objects to return to the scanning module is different. Therefore, angles at which the scanning module moves in this process are also different, scanning angles of the beams reflected by the scanning module are also different, and angle deviations generated by the beams reflected by the scanning module are also different. However, in the implementation, the receiver can better receive beams reflected by the scanning module at different scanning angles. In other words, the first prism module can compensate for angle deviations generated at different scanning angles of the scanning module.

In a possible implementation, if the first prism module includes one first prism, the first incident surface and the first emergent surface belong to a plane or a curved surface of the first prism.

If the first prism module includes a plurality of first prisms, the first incident surface belongs to a plane or a curved surface of one first prism in the plurality of first prisms, the first emergent surface belongs to a plane or a curved surface of another first prism in the plurality of first prisms, and the first beam passes through the plurality of first prisms.

In a possible implementation, the optical system further includes a second prism module, the second prism module is configured to expand an diameter of the first beam, and the second prism module includes one or more second prisms.

The second prism module includes a second incident surface and a second emergent surface. The first beam reflected by the scanning module is incident on the second incident surface, is emitted from the second emergent surface, and then is incident to the first prism module from the first incident surface at the first incident angle. An diameter of the first beam emitted from the second emergent surface is greater than an diameter of the first beam incident on the second incident surface.

In the foregoing implementation, because an diameter of a beam is reduced after the beam passes through the first prism, the diameter may be expanded by using the second prism module, and then the beam with the expanded diameter is incident to the first prism module, to compensate for the diameter of the beam, and further improve optical energy of an echo beam received by the receiver.

In a possible implementation, a refractive index of the first beam in the one or more second prisms is the same as the refractive index of the first beam in the one or more first prisms; or a deviation between a refractive index of the first beam in the one or more second prisms and the refractive index of the first beam in the one or more first prisms is less than a preset threshold.

For example, the second prism is an isotropic prism of glass or transparent plastic.

In the foregoing implementation, refractive indexes of the second prism module and the first prism are the same or slightly differ, so that diameter compensation effect can be optimized.

In a possible implementation, the optical system further includes a polarization adjuster, and the polarization adjuster is configured to adjust the polarization direction of the first beam to a first polarization direction; and the first beam incident on the first incident surface is a beam whose polarization direction is adjusted by the polarization adjuster. For example, the polarization adjuster is a quarter-wave plate or a half-wave plate.

In the foregoing implementation, the polarization adjuster may change a polarization direction of a beam, so that a polarization direction of a beam incident to the first prism module is not perpendicular to the optical axis of the first prism, to meet a system design requirement of refraction of extraordinary light generated after the beam is incident to the first prism module.

In a possible implementation, the optical system further includes a beam diameter adjuster, and the beam diameter adjuster is configured to reduce the diameter of the first beam.

The first beam incident to the first prism module is a beam whose diameter is reduced by the beam diameter adjuster.

For example, the beam diameter adjuster includes a Kepler beam expansion/reduction system or a Galileo beam expansion/reduction system.

In the foregoing implementation, the beam diameter adjuster may change an diameter of a beam, to meet a design requirement of the system.

In a possible implementation, the optical system further includes a polarization beam splitter, and the polarization beam splitter is configured to reflect the first beam in the first polarization direction to the receiver.

In the foregoing implementation, the polarization beam splitter may be configured to select required polarized light, to meet a design requirement of the system.

In a possible implementation, the optical system further includes a reflector, and the reflector is configured to reflect the first beam reflected by the scanning module, so that the first beam is propagated in a direction in which the first prism module is located.

In the foregoing implementation, a propagation direction of a beam may be changed by using the reflector, to meet a design requirement of a receiving optical path.

In a possible implementation, the first beam is emitted from the first emergent surface at a first emergent angle.

The optical system further includes an emitter, configured to emit a second beam. The first emergent surface is an incident surface for the second beam, and the first incident surface is an emergent surface for the second beam.

The first prism module is further configured to adjust a propagation direction of the second beam. The second beam is incident on the first emergent surface at a second incident angle, and is emitted from the first incident surface.

The second incident angle is the same as the first emergent angle, or an angle deviation between the second incident angle and the first emergent angle is less than an angle threshold.

In the foregoing implementation, the optical system is a system in which emitting and receiving share a common path, and the system in which emitting and receiving share a common path can save components and reduce costs. In addition, the second incident angle and the first emergent angle are the same as or slightly differ, so that an optical energy loss can be reduced, and overall efficiency of the system can be improved.

In a possible implementation, a polarization direction of the second beam is perpendicular to the polarization direction of the first beam.

In the foregoing implementation, a polarization direction of an emitted beam (the second beam) is perpendicular to a polarization direction of an echo beam (the first beam), so that overall efficiency of the system can be optimized.

In a possible implementation, the first beam is emitted from the first emergent surface at an emergent angle of 90°.

In the foregoing implementation, the first beam is vertically emitted from the first prism module, so that a polarization change of the emitted beam can be reduced, and overall efficiency can be optimized.

According to a second aspect, this application provides a detection apparatus. The detection apparatus includes the optical system according to any one of the implementations of the first aspect.

According to a third aspect, this application provides a terminal. The terminal includes the optical system according to any one of the first aspect, or includes the detection apparatus according to the second aspect.

### BRIEF DESCRIPTION OF DRAWINGS

FIG. 1 is a diagram of birefringence;
FIG. 2 is a diagram of refraction of extraordinary light in a crystal prism;
FIG. 3 and FIG. 4 are diagrams of wavefronts of beams;
FIG. 5 is a diagram in which a refractive index of extraordinary light changes with an included angle θ;
FIG. 6 is a diagram of refraction of light in an isotropic prism;
FIG. 7 is a diagram of an architecture of a detection apparatus system;
FIG. 8 is a diagram of a deviation of an echo beam; and
FIG. 9, FIG. 9A, and FIG. 10 to FIG. 16 are diagrams of structures of optical systems according to embodiments of this application.

### DESCRIPTION OF EMBODIMENTS

In embodiments of this application, "a plurality of" means two or more than two. In embodiments of this application, "and/or" is used to describe an association relationship between associated objects, and represents three relationships that may exist independently. For example, A and/or B may represent the following three cases: Only A exists, only B exists, or both A and B exist. A description manner, for example, "at least one item (or at least one piece) of a1, a2, ..., and an", used in embodiments of this application includes a case in which any one of a1, a2, ..., and an exists alone, and also includes any combination of any plurality of a1, a2, ..., and an. Each case may exist alone. For example, a description manner of "at least one item of a, b, and c" includes a case of a single a, a single b, a single c, a combination of a and b, a combination of a and c, a combination of b and c, or a combination of a, b, and c.

The terms such as "first" and "second" in this application are used to distinguish between same or similar items with basically same roles and functions. It should be understood that there is no logical or timing dependency between "first", "second", and "n^{th}", and neither a quantity nor an execution sequence is limited. It should also be understood that although the following descriptions use terms such as "first" and "second" to describe various elements, these elements should not be limited by the terms. These terms are simply used to distinguish one element from another.

In embodiments of this application, unless otherwise stated or there is a logic conflict, terms and/or descriptions in embodiments are consistent and may be mutually referenced, and technical features in different embodiments may be combined into a new embodiment based on an internal logical relationship thereof.

For ease of understanding, the following first describes some terms and related optical principles in embodiments of this application by using examples.

### 1. Detection apparatus

The detection apparatus mentioned in this application may be a lidar, or may be another optical detection apparatus, for example, a fusion detection apparatus. An operating principle of the detection apparatus is to detect a corresponding target object by emitting an optical signal and receiving an optical signal from the target object.

The detection apparatus in embodiments of this application can be applied to various fields such as intelligent transportation, autonomous driving, atmospheric environment monitoring, geographic mapping, and uncrewed aerial vehicles, and can complete one or more functions such as target detection, distance measurement, speed measurement, target tracking, and imaging recognition. Functions such as distance measurement, speed measurement, target tracking, and imaging recognition are all implemented based on target detection. Therefore, detection is mainly used as an example for description in subsequent descriptions.

The detection apparatus in embodiments of this application may be applied to a roadside detection apparatus (for example, an intersection fusion detection apparatus), a vehicle-mounted detection apparatus (for example, a vehicle-mounted fusion detection apparatus), or the like, but may also be applied to another detection apparatus, for example, a detection apparatus installed on an apparatus such as an uncrewed aerial vehicle, a robot, a railcar, a bicycle, a signal light, a speed measurement apparatus, or a base station. An installation position of the detection apparatus is not limited in this application.

### 2. Polarization (polarization)

Polarized light means that oscillation directions of electric vectors of the light have a specific rule. Polarization is an inherent attribute of light, and a polarization state (polarization state) is a parameter of the light. The polarization state may be classified into linear polarization and elliptic polarization (circular polarization in a special case). When the polarized light is linearly polarized light, the polarization state further includes an angle and amplitude. When the polarized light is circularly polarized light, the polarization state further includes a polarization direction (clockwise or counterclockwise). For example, electric vectors of the linearly polarized light oscillate back and forth in one direction. However, electric vectors of non-polarized light such as natural light oscillate disorderly, that is, the electric vectors do not oscillate in a same direction, and there is no fixed time correspondence (no fixed phase) when the electric vectors oscillate. Therefore, the electric vectors of the non-polarized light oscillate randomly and have no fixed rule. To describe a relationship between oscillation directions, basic linearly polarized light (the linearly polarized light may be combined into elliptically polarized light) is usually distinguished by using P-polarized light and S-polarized light. The P-polarized light represents linearly polarized light whose oscillation direction is parallel to an incident surface, and the S-polarized light represents linearly polarized light whose oscillation direction is perpendicular to the incident surface.

### 3. Isotropy and anisotropy

Isotropy means that physical properties of a substance in different directions are the same.

Anisotropy means that physical properties of a substance in different directions are different.

For example, an isotropic medium in embodiments of this application may mean that optical properties of the medium in different directions are the same. Similarly, an anisotropic medium in embodiments of this application may mean that optical properties of the medium in different directions are different.

### 4. Birefringence

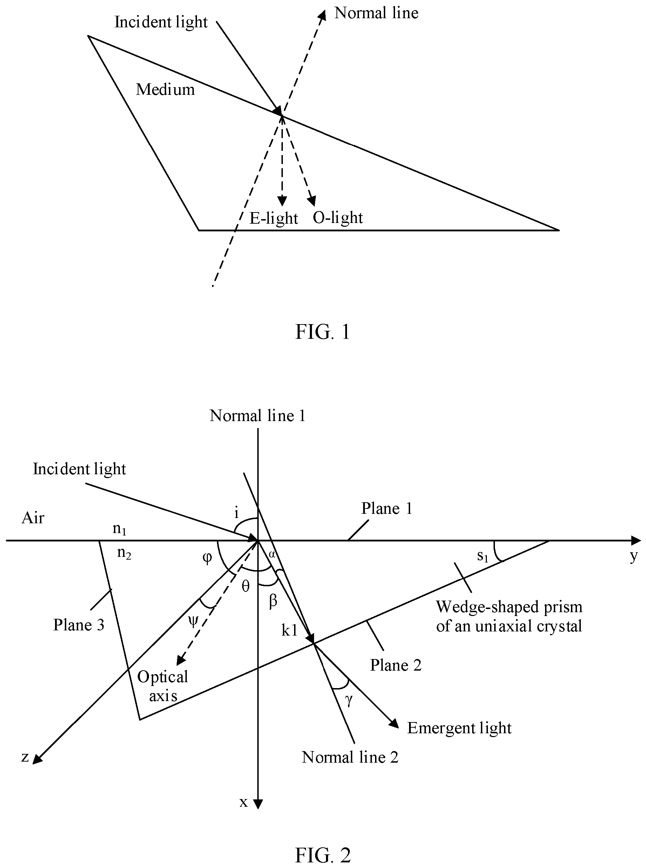

A beam of light incident to an anisotropic medium becomes two beams of light after being refracted. This phenomenon is referred to as a birefringence phenomenon. For example, refer to FIG. 1. The two refracted beams of light are both linearly polarized light. A beam of light that conforms to the law of refraction is referred to as ordinary (ordinary) light or o-light, and is located in an incident surface (a plane including incident light and a normal line at an incident point). The other beam of light that does not conform to the law of refraction is not necessarily in the incident surface, and is referred to as extraordinary (extraordinary) light or e-light.

For example, the anisotropic medium may be, for example, an anisotropic transparent medium such as a crystal, glass, or transparent plastic. This is not limited in embodiments of this application.

### 5. Refraction of e-light

A refractive index of e-light is related to factors such as an optical axis, an incident angle, and a dielectric material. For ease of understanding, this application is described by using an example in which a medium is an uniaxial crystal. For example, refer to FIG. 2. In FIG. 2, an example in which light is incident from air to a wedge-shaped prism of the uniaxial crystal and then emitted from the wedge-shaped prism is used. The wedge-shaped prism includes a plane 1, a plane 2, and a plane 3.

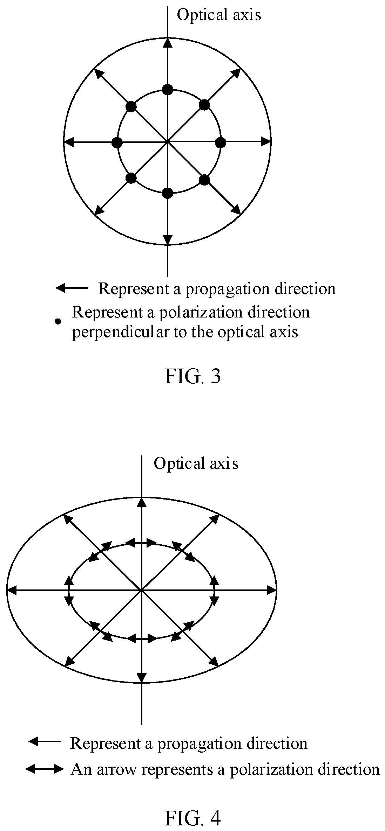

In FIG. 2, a plane with x=0 is a boundary between two media. An interface with z=0 is an incident surface including incident light and a normal line 1. A y-axis is on a boundary line between the boundary and the incident surface, and is also on the plane 1. In addition, an optical axis of the wedge-shaped prism of the uniaxial crystal is shown in FIG. 2. An included angle between the optical axis and a z-axis is ψ (0≤ψ≤π), and an included angle between a projection of the optical axis on the incident surface and the y-axis is φ (0≤φ≤π). For example, when the o-light is propagated in the crystal, a polarization direction is perpendicular to the optical axis. Therefore, oscillation frequencies and speeds of the o-light propagated in all directions are the same. Therefore, refractive indexes of the o-light in the crystal are the same, and a formed wavefront is a spherical surface, for example, as shown in FIG. 3. When the e-light is propagated in different directions in the crystal, polarization directions relative to the optical axis are different, and oscillation frequencies and speeds of the e-light propagated in the directions are different. Therefore, a refractive index of the e-light in the crystal varies with a propagation direction, and a formed wavefront is an ellipsoidal surface, for example, as shown in FIG. 4. Based on this, as long as a polarization direction of light is not perpendicular to the optical axis of the crystal, a refractive index of the light in the crystal may be changed by changing a direction in which the light is incident to the crystal, to adaptively change a direction in which the light is emitted from the crystal, thereby adjusting a propagation direction of the light. Based on this conclusion, the following quantitatively analyzes a relationship between an incident angle and an emergent angle of the e-light passing through the crystal.

In FIG. 2, an included angle between the incident light and the normal line 1 is an incident angle, and is represented by i. The normal line 1 is perpendicular to the plane 1. E-light refracted after the incident light is incident from the air to the wedge-shaped prism of the uniaxial crystal is represented by k1. An included angle between the refracted light k1 and the normal line 1 is a refraction angle, and is represented by β. An included angle between the refracted light k1 and the optical axis is represented by θ. Assuming that a refractive index of the air is represented by n₁, and a refractive index of the e-light in the wedge-shaped prism of the uniaxial crystal is represented by n₂, the following calculation formula (1) is obtained: ${n}_{1} * sin \left(i\right) = {n}_{2} \left(θ\right) * sin \left(β\right) .$

It can be learned from the foregoing calculation formula (1) that the refractive index n₂ is a function of the included angle θ between the refracted light k1 and the optical axis. For details, refer to the following calculation formula (2): ${n}_{2}^{2} \left(θ\right) = \frac{{n}_{o}^{2} {n}_{e}^{2}}{{n}_{o}^{2} sin \left({θ}^{2}\right) + {n}_{e}^{2} cos \left({θ}^{2}\right)} .$

In the foregoing formula (2), nₒ represents a refractive index of light whose polarization direction is perpendicular to the optical axis. Because the polarization direction of the o-light is perpendicular to the optical axis, nₒ is also a refractive index of the o-light in the wedge-shaped prism of the uniaxial crystal. nₑ represents a refractive index of light whose polarization direction is parallel to the optical axis. nₒ is smaller than nₑ.

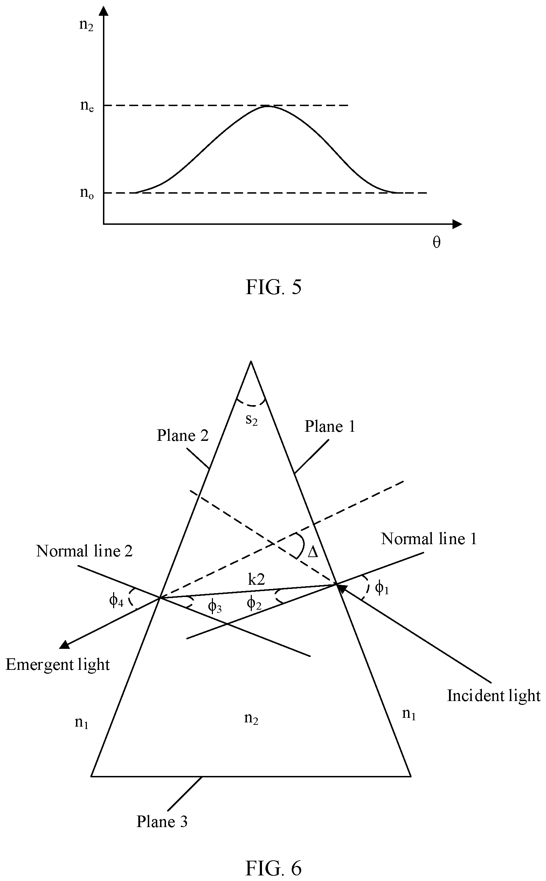

Based on the foregoing calculation formula (2), it may be learned through analysis that the refractive index n₂ changes with the included angle θ. For a specific change relationship, refer to FIG. 5. It can be seen that a value of n₂ is between nₒ and nₑ. Further, θ is the included angle between the refracted light k1 and the optical axis, and a propagation direction of the refracted light k1 is related to the incident angle i. Therefore, as the incident angle i changes, the included angle θ varies accordingly, and as the included angle θ changes, the refractive index n₂ varies accordingly. On the contrary, the refractive index n₂ is related to the incident angle i.

In addition, in FIG. 2, refraction also occurs when the refracted light k1 passes through the wedge-shaped prism of the uniaxial crystal and enters the air for propagation. The refracted light is emitted from the wedge-shaped prism of the uniaxial crystal, and is referred to as emergent light for short. A polarization direction of the emergent light is the same as a polarization direction of the refracted light k1. An included angle between the refracted light k1 and a normal line 2 is an incident angle at which the refracted light k1 is incident from the wedge-shaped prism of the uniaxial crystal to the air, and is represented by α. The normal line 2 is perpendicular to the plane 2 of the wedge-shaped prism of the uniaxial crystal. An included angle between the emergent light and the normal line 2 is a refraction angle, and is represented by γ. The following calculation formula (3) is obtained: ${n}_{1} * sin \left(γ\right) = {n}_{2} \left(θ\right) * sin \left(α\right) .$

Assuming that an included angle between the plane 1 and the plane 2 is s₁, and the included angle s₁ is also referred to as a wedge angle of the wedge-shaped prism of the uniaxial crystal, α=β-s₁ may be obtained through calculation. In this case, the following formula (4) is obtained: ${n}_{1} * sin \left(γ\right) = {n}_{2} \left(θ\right) * sin \left(β-{s}_{1}\right) .$

Based on the foregoing calculation formula (4), a formula (5) may be obtained: γ=arcsin[(n₂(θ)/n₁)*sin(*β*-s₁)]. In addition, the refractive index n₁ of the air is approximately equal to 1. Therefore, γ=arcsin[(n₂(θ)*sin(*β*-s₁)] may be obtained. It can be learned that the emergent angle γ is related to the included angle θ, the included angle s₁, and the refraction angle β. It can be learned from the calculation formula (1) and the calculation formula (2) that the refraction angle β is related to the incident angle i and the included angle θ. Therefore, the emergent angle γ is related to the included angle θ, the included angle s₁, and the incident angle i. Further, because the included angle θ is related to the refractive index n₂, and the refractive index n₂ is related to the incident angle i, the emergent angle γ is related to the included angle s₁ and the incident angle i. Based on this, if it is assumed that the included angle s₁ remains unchanged, the emergent angle γ may be adjusted by adjusting the incident angle i.

It may be understood that, in FIG. 2 to FIG. 5, a medium such as the uniaxial crystal is mainly used as an example, and does not constitute a limitation on embodiments of this application.

### 6. Refraction of light by an isotropic wedge-shaped prism

For example, the isotropic wedge-shaped prism may include, for example, a transparent wedge-shaped prism such as an isotropic glass wedge-shaped prism or a transparent plastic wedge-shaped prism. This is not limited in embodiments of this application. Light is refracted twice when passing through the isotropic wedge-shaped prism. For ease of understanding, for example, refer to FIG. 6. FIG. 6 illustrates a diagram in which light is incident from air to the isotropic wedge-shaped prism and then is emitted from the isotropic wedge-shaped prism.

It can be seen from FIG. 6 that the isotropic wedge-shaped prism includes a plane 1, a plane 2, and a plane 3. An included angle between the plane 1 and the plane 2 is s₂. The included angle s₂ is also referred to as a wedge angle of the isotropic wedge-shaped prism. Incident light is incident from the plane 1 to the wedge-shaped prism, and is emitted from the wedge-shaped prism through the plane 2. An incident angle (that is, an included angle between the incident light and a normal line 1, where the normal line 1 is perpendicular to the plane 1) at which the incident light is incident from the plane 1 is ϕ₁. Generated refracted light is represented by k₂, and a corresponding refraction angle (an included angle between the refracted light k₂ and the normal line 1) is ϕ₂. Refraction also occurs when the refracted light k₂ is emitted from the plane 2, and an incident angle of the refraction (that is, an included angle between the refracted light k₂ and a normal line 2, where the normal line 2 is perpendicular to the plane 2) is ϕ₃. Generated refracted light is referred to as emergent light for short, and a corresponding refraction angle (an included angle between the emergent light and the normal line 2) is ϕ₄.

In FIG. 6, assuming that a refractive index of the air is n₁, and a refractive index of the isotropic wedge-shaped prism is n₂, the following calculation formula (5) is obtained: ${n}_{1} * sin {ϕ}_{1} = {n}_{2} * sin {ϕ}_{2} , and {n}_{2} * sin {ϕ}_{3} = {n}_{1} * sin {ϕ}_{4} .$

In FIG. 6, because the normal line 1 is perpendicular to the plane 1, and the normal line 2 is perpendicular to the plane 2, according to a principle that a sum angle of a triangle is π and a sum angle of a quadrangle is 2π, the following can be obtained: if ϕ₂+ϕ₃+π-s₂=π, ϕ₃=s₂-ϕ₂. Based on this and the calculation formula (5), the following may be obtained: ${ϕ}_{4} = arcsin \left\{\frac{{n}_{2}}{{n}_{1}}∗sin\left[{s}_{2}-arcsin\left(\frac{{n}_{1} ∗ sin {ϕ}_{1}}{{n}_{2}}\right)\right]\right\} .$

It can be learned that the emergent angle ϕ₄ is related to the incident angle ϕ₁, the included angle s₂, the refractive index n₁, and the refractive index n₂.

It may be understood that FIG. 6 is merely an example, and does not constitute a limitation on embodiments of this application.

It may be understood that a surface of a prism (for example, the crystal wedge-shaped prism and the isotropic wedge-shaped prism) in embodiments of this application may be a plane or a curved surface. In embodiments of this application, a plane is mainly used as an example for description.

For ease of understanding, the following analyzes, by using an example, disadvantages of a current detection apparatus.

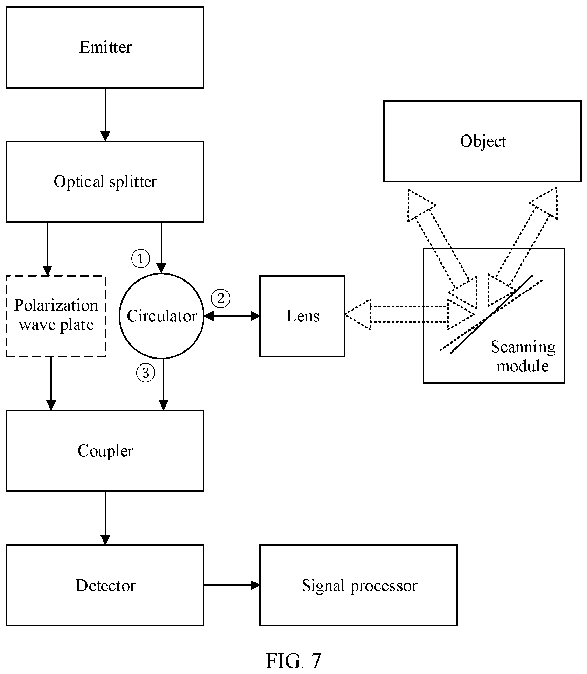

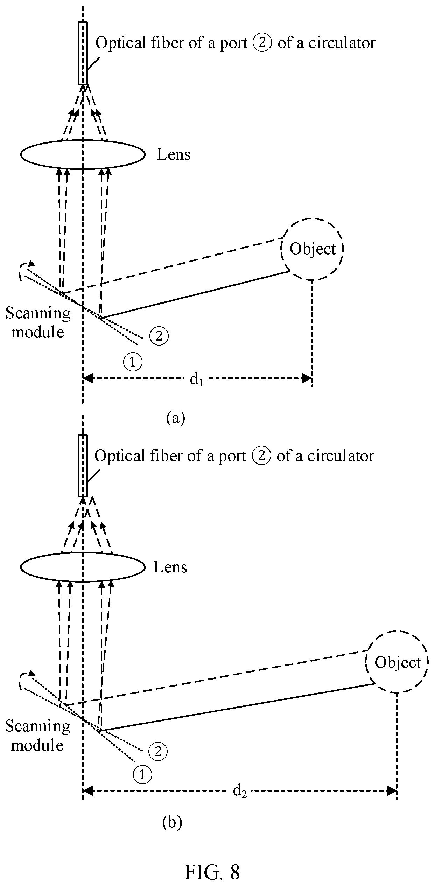

In a specific implementation, the detection apparatus (for example, a lidar) may complete detection by using a scanning module (for example, including a scanning mirror or a rotating mirror) to assist in scanning. An echo beam reflected or scattered back by an object is usually also reflected by the scanning module and then received by a detector. However, due to continuous movement of the scanning module, an angle of a propagation direction of the echo beam is deviated after the echo beam passes through the scanning module, resulting in a decrease in optical energy coupled into an optical fiber or a waveguide and a decrease in optical energy received by the detector. Consequently, detection accuracy of the lidar is affected. For ease of understanding, the following uses an architecture of a detection apparatus system shown in FIG. 7 and a diagram of a deviation of an echo beam in FIG. 8 as an example for description.

For example, a working principle of the detection apparatus is first briefly described with reference to the detection apparatus system shown in FIG. 7. An emitter may emit a beam. The beam is proportionally divided into two parts (which are respectively referred to as a first part of the beam and a second part of the beam for short) when passing through an optical splitter. The first part of the beam is sent to a coupler. Optionally, before the first part of the beam is sent to the coupler, a polarization direction of the beam may be further adjusted by using a polarization wave plate. The second part of the beam is sent to a circulator. The circulator includes three ports: a port ①, a port ②, and a port ③. The second part of the beam enters the circulator from the port ①, and is output from the port ② of the circulator. Then, after the beam is expanded by a lens, a scanning module scans the beam to a detected object. An echo beam reflected or scattered by the object is returned to the scanning module. After being reflected by the scanning module, the echo beam is reduced by the lens, and enters the circulator from the port ② of the circulator. Then, the echo beam is output from the port ③ of the circulator to the coupler. The coupler couples the echo beam and the first part of the beam, and then outputs the echo beam and the first part of the beam that are coupled to a detector for receiving. The detector may be, for example, a photoelectric detector, and may convert a received optical signal into an electrical signal. After the electrical signal is obtained, the electrical signal is input to a signal processor for processing, to implement one or more of functions such as target detection, distance measurement, speed measurement, target tracking, or imaging recognition.

It can be learned from the foregoing description that the echo beam needs to be reflected by the scanning module and then returned to a receiver side. A position of the port ② of the circulator does not change, but the scanning module moves within a time period from a moment at which the scanning module scans the beam to a moment at which the scanning module reflects the echo beam. As a result, an angle of a propagation direction of the echo beam is deviated after the echo beam passes through the scanning module. For example, refer to FIG. 8. In FIG. 8, the scanning module is shown by using a reflector surface in the scanning module as an example. ① represents an actual position of the reflector surface when the reflector surface reflects the echo beam of the object, and ② represents a position of the reflector surface when the reflector surface reflects the beam to the object. It can be seen that, within a time period from a moment at which the reflector surface reflects the beam to the object to a moment at which the reflector surface reflects the echo beam, a position of the reflector surface is rotated from ② to ①. Due to rotation of the reflector surface, an angle of a propagation direction of the reflected echo beam is deviated. In FIG. 8, a reflected beam represented by a dashed line is an ideal echo beam reflected by the reflector surface when it is assumed that the reflector surface does not move. In other words, the beam represented by the dashed line is an echo beam reflected by the reflector surface at the position ②, and a beam represented by a solid line is a deviated echo beam reflected by the reflector surface at the position ①.

In addition, it can be further learned from FIG. 8 that different distances between the object and the scanning module cause different deviations. A longer distance indicates a larger generated deviation. For example, refer to (a) and (b) in FIG. 8. A distance between the object and the scanning module in FIG. 8 (a) is represented as d₁, a distance between the object and the scanning module in FIG. 8 (b) is represented as d₂, and d₁<d₂. Because d₂ is large, the time period from the moment at which the reflector surface reflects the beam to the object to the moment at which the reflector surface reflects the echo beam is long. Therefore, a rotation angle at which the reflector surface is rotated from ② to ① is larger. As a result, an angle deviation of the propagation direction of the reflected echo beam is larger.

The angle deviation of the propagation direction of the echo beam causes an angle of the beam to also deviate after the echo beam is reduced by the lens. Consequently, the beam cannot align with an optical fiber at the port ② of the circulator to be incident. As a result, optical energy coupled into the optical fiber is reduced. In addition, a larger angle deviation of the beam indicates lower optical energy coupled to the optical fiber, and affects accuracy of subsequent function implementation.

It may be understood that FIG. 7 and FIG. 8 are merely examples, and do not constitute a limitation on embodiments of this application. In a specific implementation, a structure of the detection apparatus system may be any other system including a scanning module. In addition, the detection apparatus system may be, for example, a system in which emitting and receiving share a common path (for example, the system shown in FIG. 7) or a system in which emitting and receiving do not share a common path (for example, an echo beam is reflected to another optical path by the scanning module, and the optical path is different from an optical path through which an emitted beam passes). This is not limited in embodiments of this application.

Based on the foregoing descriptions, embodiments of this application provide an optical system, a detection apparatus, and a terminal, to compensate for a deviation angle of a propagation direction of an echo beam and optimize detection accuracy. The following provides example descriptions.

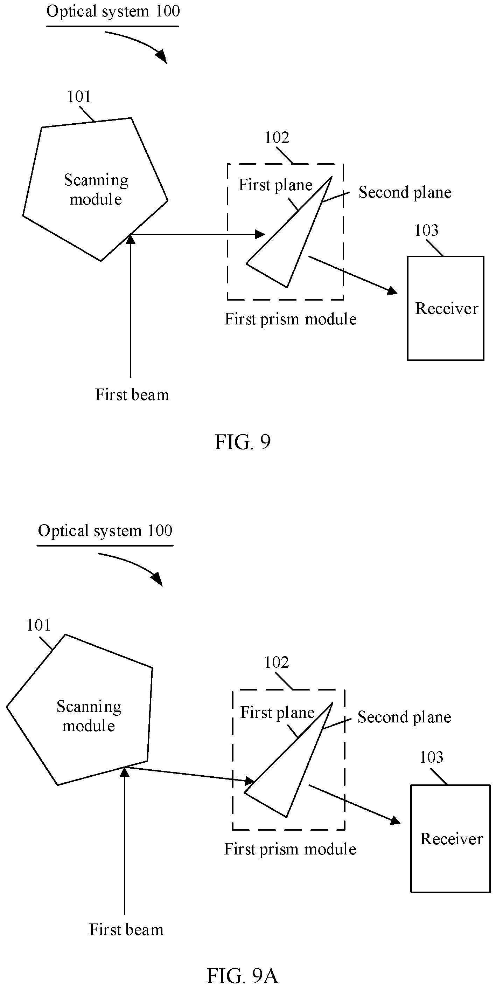

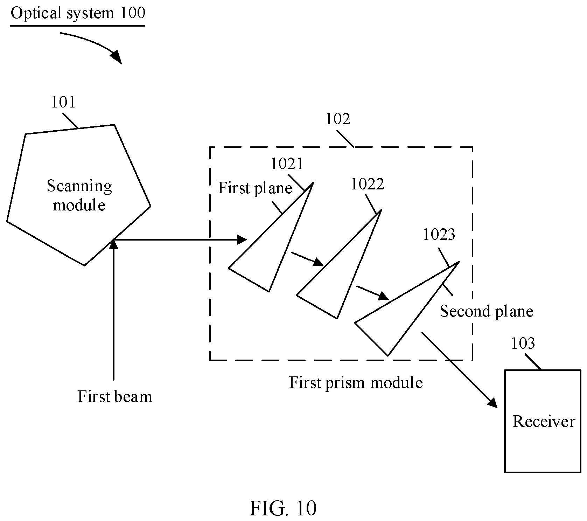

First, FIG. 9 and FIG. 10 illustrate diagrams of structures of optical systems 100 according to embodiments of this application. The optical system 100 may include a scanning module 101, a first prism module 102, and a receiver 103.

For example, the scanning module 101 may be configured to reflect a beam (referred to as a first beam for short) reflected or scattered back by an object. In a specific implementation process, the scanning module 101 may be driven by a scanning driving apparatus (not shown in FIG. 9 and FIG. 10) to operate. For example, the scanning driving apparatus may include, for example, a motor. For example, the motor may drive the scanning module to rotate or deflect. For example, the scanning module may be a scanning mirror or a rotating mirror. This is not limited in embodiments of this application. In an operation process of the scanning module 101, the first beam is incident to the scanning module 101, and may be propagated in a direction toward the first prism module 102 after being reflected by the scanning module 101.

For example, the first prism module 102 may include one or more first prisms. FIG. 9 shows an example in which one first prism is included. FIG. 10 shows an example in which three first prisms (referring to a first prism 1021, a first prism 1022, and a first prism 1023) are included. A quantity of first prisms included in the first prism module 102 is not limited in embodiments of this application. For example, the first prism is an anisotropic crystal prism, a glass prism, a transparent plastic prism, or the like. For example, the first prism may be, for example, a wedge-shaped prism or a prism of another shape. In embodiments of this application, the wedge-shaped prism is mainly used as an example for description.

A polarization direction of the first beam is not perpendicular to an optical axis of any first prism. Based on the foregoing description of refraction of the e-light, it can be learned that a refractive index of a beam whose polarization direction is not perpendicular to the optical axis of the first prism after the beam is incident to the first prism may be determined based on an incident direction (that is, an incident angle) of the beam. Therefore, the first prism module 102 may be configured to adjust a propagation direction of the first beam. That is, refraction generated after the first beam is incident to the first prism is equivalent to refraction of the e-light, and satisfies the law of refraction of the e-light.

For example, as shown in FIG. 9 and FIG. 10, the first prism module 102 includes a first plane and a second plane. During specific implementation, the first beam reflected by the scanning module 101 may be incident from the first plane in the first prism module 102 in a first propagation direction. After being emitted from the second plane of the first prism module 102, the first beam is propagated in a second propagation direction. The first beam is incident on the first plane at a first incident angle, and is emitted from the second plane at a first emergent angle. The first plane is an incident surface for the first beam, and the second plane is an emergent surface for the first beam.

For example, if the first prism module 102 includes one first prism, the first plane and the second plane belong to planes of the first prism, for example, as shown in FIG. 9. Alternatively, for example, if the first prism module 102 includes a plurality of first prisms (for example, as shown in FIG. 10), the first plane belongs to a plane of one first prism (for example, the first prism 1021 shown in FIG. 10) in the plurality of first prisms, and the second plane belongs to a plane of another first prism (for example, the first prism 1023 shown in FIG. 10) in the plurality of first prisms. The first beam passes through the plurality of first prisms. The another first prism is a first prism through which the first beam finally passes.

For example, the receiver 103 may be configured to receive the first beam passing through the first prism module 102. For example, the receiver 103 may include a receiving optical fiber and a detector. The receiving optical fiber may be configured to: receive the first beam, and transmit the first beam to the detector for photoelectric detection. Optionally, the receiver may further include another component. For example, the system shown in FIG. 7 is used as an example. The receiver 103 may include the circulator, the coupler, the detector, and the like shown in FIG. 7. This is not limited in embodiments of this application.

For example, the detector may be, for example, a photoelectric detector. The photoelectric detector includes but is not limited to a single-photon avalanche diode (single-photon avalanche diode, SPAD), a silicon photomultiplier (Silicon photomultiplier, SiPM), a multi-pixel photon counter (multi-pixel photon counter, MPPC), a semiconductor avalanche photodiode (avalanche photo detector, APD), a "positive-intrinsic-negative" (positive-intrinsic-negative, PIN)-type diode (or referred to as a P-type semiconductor-impurity-N-type semiconductor diode), or the like. It may be understood that this is merely an example, and a specific form or type of the receiver is not limited in embodiments of this application.

In the optical system 100, a propagation direction of an echo beam (for example, the first beam) is adjusted by using the first prism module. Because a refractive index of the first prism in the first prism module may be adjusted by changing the first propagation direction (or the incident angle) of the beam, the first propagation direction (the incident angle) of the beam can be properly selected, so that a propagation direction of the beam emitted from the first prism module can meet a requirement of propagation direction compensation (angle compensation). In this way, an angle deviation of a propagation direction caused by the scanning module is compensated, so that optical energy of an echo beam received by the receiver can be increased, more information can be obtained, and detection accuracy can be improved. Further, the first prism is used to compensate for the angle deviation of the propagation direction caused by the scanning module. This is easy to implement and has low costs, and can result in a multiple-fold reduction in the angle deviation.

In addition, in the optical system 100, the first prism module 102 may include one or more first prisms. In a specific implementation, because angle compensation of one first prism is limited, if an angle deviation caused by the scanning module can be compensated by using one first prism, the first prism module 102 may include one first prism. If an angle deviation caused by the scanning module is large, the one first prism cannot meet a compensation requirement. In this case, a plurality of first prisms may be used. A specific quantity of used first prisms may be determined based on a requirement. This is not limited in embodiments of this application. It can be learned that, when the solution in embodiments of this application is used to implement angle deviation compensation, a quantity of first prisms may be further flexibly adjusted, to meet different compensation requirements, making it widely applicable across diverse scenarios.

In a possible implementation, because distances between objects and the scanning module are different, time required for beams reflected or scattered by the objects to return to the scanning module is different. Therefore, angles at which the scanning module moves in this process are also different, scanning angles of the beams reflected by the scanning module 101 are also different, and angle deviations generated by the beams reflected by the scanning module are also different. In embodiments of this application, when the scanning module 101 reflects the first beam at different scanning angles, the receiver 103 may receive the first beam emitted from the first prism module. For ease of understanding, refer to FIG. 9A as an example. Compared with FIG. 9, in FIG. 9A, after being reflected by the scanning module 101, the first beam may be incident on the second plane at an angle different from the first incident angle; and then, the first beam is emitted from the second plane at another emergent angle. The emitted beam can still be better received by the receiver 103. That is, the first prism module also compensates for a deviation angle of the propagation direction of the first beam.

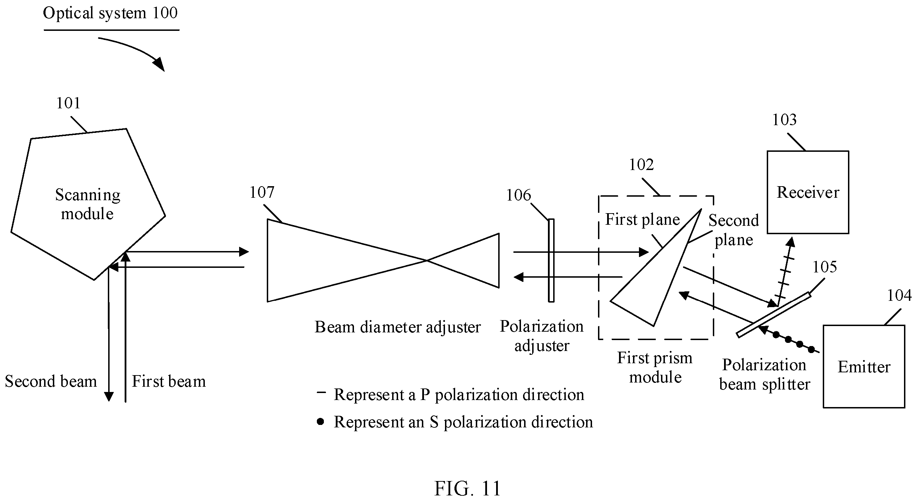

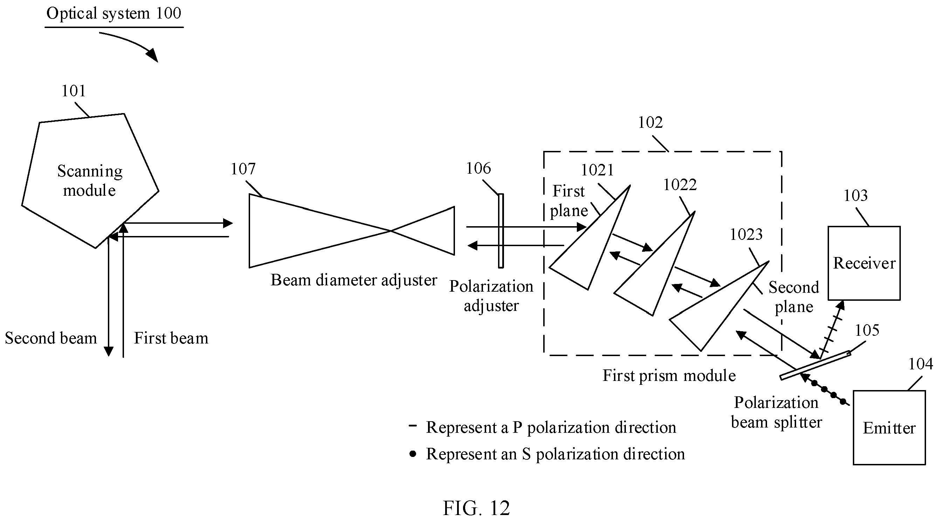

In a possible implementation, the optical systems 100 shown in FIG. 9 and FIG. 10 may be applied to a detection apparatus in which emitting and receiving share a common path. For ease of understanding, refer to FIG. 11 and FIG. 12 as examples.

It can be seen from FIG. 11 and FIG. 12 that the optical system 100 may further include an emitter 104, a polarization beam splitter (polarization beam splitter, PBS) 105, a polarization adjuster 106, and a beam diameter adjuster 107.

For example, the emitter 104 may be configured to emit a laser beam (referred to as a second beam for short). The emitter may be, for example, a laser or a laser array. This is not limited in embodiments of this application. For example, a frequency of the beam emitted by the emitter 104 may change continuously, for example, the beam may be frequency modulated continuous wave (frequency modulated continuous wave, FMCW) laser.

For example, the polarization beam splitter 105 may be configured to split polarized light. Polarized light in the first polarization direction cannot pass through the polarization beam splitter 105, and is reflected by the polarization beam splitter 105. Polarized light in the second polarization direction may pass through the polarization beam splitter 105. For example, in a possible implementation, the first polarization direction and the second polarization direction are perpendicular to each other. For example, the polarized light in the first polarization direction may be, for example, P-polarized light, and the polarized light in the second polarization direction may be, for example, S-polarized light. Alternatively, for example, the polarized light in the first polarization direction may be S-polarized light, and the polarized light in the second polarization direction may be, for example, P-polarized light. Alternatively, in another possible implementation, the first polarization direction and the second polarization direction may be two other different polarization directions. This is not limited in embodiments of this application. In embodiments of this application, an example in which the first polarization direction and the second polarization direction are perpendicular to each other is used for description.

For example, the polarization adjuster 106 may be configured to adjust a polarization direction of a beam. The polarization adjuster 106 may be, for example, a quarter-wave plate (quarter-wave plate, QWP). The QWP may also be referred to as a quarter-phase retarder. A beam passes through the QWP once, and a polarization direction of the beam is rotated by 45°. If the beam passes through the QWP twice (forward and backward), a polarization direction of the beam is rotated by 90°. It may be understood that the polarization adjuster 106 may alternatively be, for example, a wave plate of another proportion, and is not limited to the quarter-wave plate. For ease of description, the quarter-wave plate is used as an example for description in embodiments of this application.

For example, the beam diameter adjuster 107 may be configured to expand or reduce an diameter of a beam. The beam diameter adjuster 107 may be, for example, a Kepler beam expansion/reduction system or a Galileo beam expansion/reduction system. This is not limited in embodiments of this application.

In a possible implementation, a polarization direction of the second beam emitted by the emitter 104 is the second polarization direction. Therefore, the second beam can pass through the polarization beam splitter 105. Alternatively, for example, the second beam emitted by the emitter 104 may include a plurality of polarization directions, for example, include the first polarization direction and the second polarization direction. In this case, only a beam in the second polarization direction can pass through the polarization beam splitter 105. In FIG. 11 and FIG. 12, an example in which the emitter 104 emits light in the second polarization direction and the second polarization direction is an S polarization direction is used for illustration. For ease of description, the beam passing through the polarization beam splitter 105 is still referred to as the second beam.

The second beam passing through the polarization beam splitter 105 is incident to the first prism module 102 in a third propagation direction. For example, refer to FIG. 11 and FIG. 12. The second beam is incident on the second plane of the first prism module 102, is emitted from the first plane after passing through the one or more first prisms of the first prism module 102, and continues to be propagated in a fourth propagation direction. The second beam is incident on the second plane at a second incident angle, and is emitted from the first plane at a second emergent angle. The second plane is an incident surface for the second beam, and the first plane is an emergent surface for the second beam.

For example, a polarization direction of the second beam passing through the polarization beam splitter 105 is the second polarization direction. The second polarization direction is perpendicular to an optical axis of each first prism in the first prism module 102. Therefore, refraction generated when the second beam is incident to the first prism and refraction generated when the second beam is emitted from the first prism to the air follow the law of refraction.

In a possible implementation, for example, the second beam may be vertically incident on the second plane of the first prism module 102. That is, the third propagation direction is perpendicular to the second plane, and an incident angle at which the second beam is incident on the second plane is zero. In this implementation, the second beam is not refracted when being incident on the second plane. The second beam is incident to the first prism module 102, and after passing through the one or more first prisms in the first prism module 102, the second beam is refracted when being emitted from the first plane. Alternatively, in another possible implementation, an incident angle at which the second beam is incident on the second plane may be any angle greater than 0 and less than 90°. In this implementation, the second beam is refracted once when being incident on the second plane. After passing through the one or more first prisms in the first prism module 102, the second beam is refracted for the second time when being emitted from the first plane. In other words, the second beam is refracted twice in a process in which the second beam passes through the first prism module 102.

In a possible implementation, when the first prism module 102 includes a plurality of first prisms, the plurality of first prisms may be properly placed, so that the second beam is vertically incident to each first prism. For ease of understanding, FIG. 12 is used as an example for description. For example, in FIG. 12, the second beam passing through the polarization beam splitter 105 is vertically incident on the second plane in the first prism module 102, that is, is vertically incident to the first prism 1023. The second beam is refracted for the first time when being emitted from the first prism 1023, and the refracted second beam is still vertically incident to the first prism 1022. The second beam is refracted for the second time when being emitted from the first prism 1022, and the refracted second beam is still vertically incident to the first prism 1021. The second beam is refracted for a third time when being emitted from the first prism 1022. The propagation direction after the third time of refraction is the fourth propagation direction. For example, to enable the second beam to be vertically incident to each of the plurality of first prisms, two-dimensional arrangement optimization may be performed on the plurality of first prisms. For example, a position and/or an angle of each first prism may be adjusted in a manner such as moving forward, moving backward, moving leftward, moving rightward, moving upward, or rotating downward. A placement position or an angle of each first prism is not limited in embodiments of this application.

Alternatively, in another possible implementation, an incident angle at which the second beam is incident to each of the plurality of first prisms may be any angle greater than 0 and less than 90°. In this implementation, the second beam is refracted once when being incident to each first prism, and is also refracted once when being emitted from each first prism. The incident angle at which the second beam is incident to each first prism may be set based on an actual application requirement. This is not limited in embodiments of this application.

The second beam passing through the first prism module 102 is propagated to the polarization adjuster 106 in the fourth propagation direction. After the second beam passes through the polarization adjuster 106, the polarization direction of the second beam is rotated by 45°. Then, the second beam continues to be propagated to the beam diameter adjuster 107. After the beam diameter adjuster 107 expands the beam, the second beam is sent to the scanning module 101. The second beam is reflected by the scanning module 101 to an external object.

An echo beam (namely, the first beam) is formed after the second beam is reflected or scattered by the object. A polarization direction of the first beam is the same as a polarization direction of the second beam incident on the object. The first beam is propagated back to the scanning module 101, and is reflected by the scanning module 101 to the beam diameter adjuster 107. After the beam diameter adjuster 107 reduces the first beam, the first beam is sent to the polarization adjuster 106. After the first beam passes through the polarization adjuster 106, the polarization direction of the first beam is rotated by 45°. In this case, compared with a polarization direction of the second beam before being incident to the first prism module 102, the polarization direction of the first beam has been rotated by 90°. That is, after the first beam passes through the polarization adjuster 106, the polarization direction of the first beam is perpendicular to the polarization direction (namely, the second polarization direction) of the second beam before being incident to the first prism module 102. In this case, the polarization direction of the first beam passing through the polarization adjuster 106 may be the foregoing first polarization direction.

After passing through the polarization adjuster 106, the first beam is incident on the first plane of the first prism module 102. Then, after passing through the one or more first prisms of the first prism module 102, the first beam is emitted from the second plane of the first prism module 102, and continues to be propagated in the second propagation direction. For example, the first polarization direction is not perpendicular to an optical axis of any first prism. Based on the foregoing description of refraction of the e-light, it can be learned that a refractive index of a beam whose polarization direction is not perpendicular to the optical axis of the first prism after the beam is incident to the first prism may be determined based on an incident direction (that is, an incident angle) of the beam. Therefore, the first prism module 102 may be configured to adjust the propagation direction of the first beam.

After being emitted from the second plane of the first prism module 102, the first beam is propagated to the polarization beam splitter 105. Because the polarized light in the first polarization direction cannot pass through the polarization beam splitter 105, the first beam is reflected by the polarization beam splitter 105 to the receiver 103. In FIG. 11 and FIG. 12, an example in which the first polarization direction is a P polarization direction is used for illustration.

After receiving the first beam, the receiver 103 performs optical-to-electrical conversion to obtain an electrical signal. Then, the electrical signal is input to a signal processor (not shown in FIG. 11 and FIG. 12) for processing, to implement one or more functions such as target detection, distance measurement, speed measurement, target tracking, or imaging recognition.

For example, the second propagation direction is the same as the third propagation direction, that is, the second incident angle is the same as the first emergent angle. Alternatively, an angle deviation between the second propagation direction and the third propagation direction is less than an angle threshold, that is, an angle deviation between the second incident angle and the first emergent angle is less than the angle threshold. The angle threshold may be set based on an actual application requirement. This is not limited in embodiments of this application. A smaller angle threshold indicates higher precision of compensation for the angle deviation caused by the scanning module and better compensation effect.

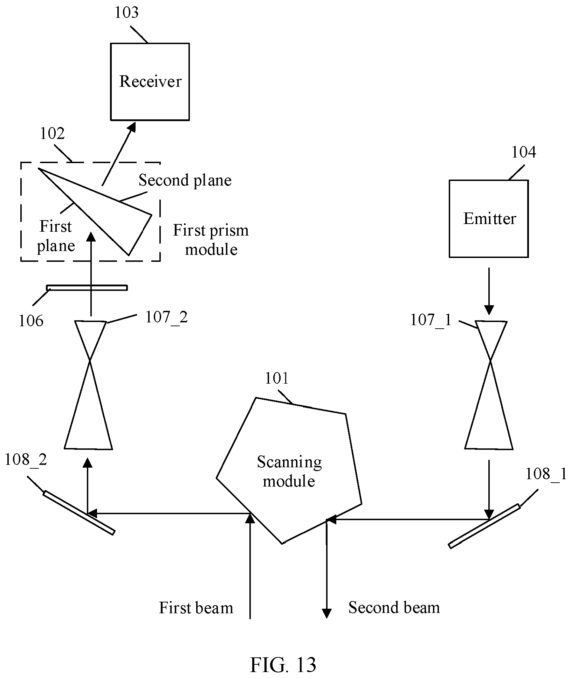

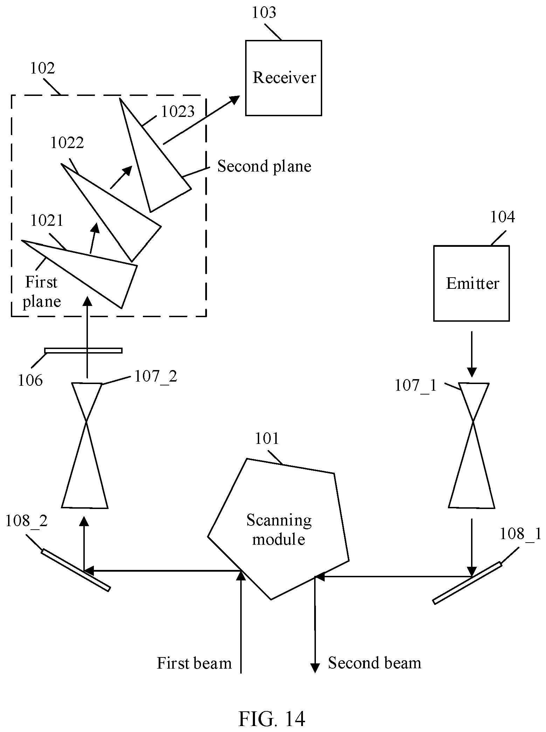

In another possible implementation, the optical systems 100 shown in FIG. 9 and FIG. 10 may be applied to a detection apparatus in which emitting and receiving do not share a common path. For ease of understanding, refer to FIG. 13 and FIG. 14 as examples.

It can be seen from FIG. 13 and FIG. 14 that the optical system 100 may further include an emitter 104, a polarization adjuster 106, two beam diameter adjusters 107_1 and 107_2, and two reflectors 108_1 and 108_2.

For example, the emitter 104 may be configured to emit a laser beam (referred to as a second beam for short). The emitter may be, for example, a laser or a laser array. This is not limited in embodiments of this application.

For example, the polarization adjuster 106 may be configured to adjust a polarization direction of the beam. The polarization adjuster 106 may be, for example, a quarter-wave plate (quarter-wave plate, QWP) or a half-wave plate (half-wave plate, HWP). The QWP may also be referred to as a quarter-phase retarder. A beam passes through the QWP once, and a polarization direction of the beam is rotated by 45°. The HWP may also be referred to as a half-phase retarder. A beam passes through the HWP once, and a polarization direction of the beam is rotated by 90°. It may be understood that the polarization adjuster 106 may alternatively be, for example, a wave plate of another proportion, and is not limited to the quarter-wave plate or the half-wave plate. For ease of description, in embodiments of this application, an example in which the polarization adjuster 106 is a half-wave plate is used for description.

In a possible implementation, the optical system 100 shown in FIG. 13 and FIG. 14 may not include the polarization adjuster 106. For details, refer to the following description.

For example, the two beam diameter adjusters may be configured to expand or reduce an diameter of the beam. The beam diameter adjuster 107_1 is mainly configured to expand the second beam emitted by the emitter 104. The beam diameter adjuster 107_2 is mainly configured to reduce an echo beam (for example, the first beam) reflected by the scanning module 101. The two beam diameter adjusters may be, for example, a Kepler beam expansion/reduction system or a Galileo beam expansion/reduction system. This is not limited in embodiments of this application.

For example, the two reflectors 108_1 and 108_2 may be configured to reflect a beam, to change a propagation direction of the beam.

In a possible implementation, a polarization direction of the second beam emitted by the emitter 104 may be, for example, the first polarization direction, or may be, for example, the second polarization direction. Alternatively, the second beam may be a beam including a plurality of polarization directions (for example, including the first polarization direction and the second polarization direction). For example, if the second beam is a beam including a plurality of polarization directions, a polarization beam splitter may be added between the emitter 104 and the beam diameter adjuster 107_1. For example, the polarization beam splitter may allow light in the first polarization direction or the second polarization direction to pass through, and filter out light in another polarization direction. For ease of description, a beam passing through the polarization beam splitter is still referred to as the second beam.

The second beam is propagated to the reflector 108_1 after being expanded by the beam diameter adjuster 107_1. The second beam is sent to the scanning module 101 after being reflected by the reflector 108_1. The second beam is reflected by the scanning module 101 to an external object. An echo beam (namely, the first beam) is formed after the second beam is reflected or scattered by the object. A polarization direction of the first beam is the same as a polarization direction of the second beam incident on the object. The first beam is propagated back to the scanning module 101, and is reflected by the scanning module 101 to the reflector 108_2. The reflector 108_2 reflects the first beam to the beam diameter adjuster 107_2.

In a possible implementation, if a polarization direction of the first beam is not perpendicular to an optical axis of any first prism in the first prism module 102, refraction generated in a process in which the first beam passes through the first prism module 102 can conform to the law of refraction of the e-light, and the polarization direction of the first beam does not need to be adjusted. Therefore, the polarization adjuster 106 does not need to be disposed. After being reduced by the beam diameter adjuster 107_2, the first beam is sent to the first prism module 102. The first beam may be incident on the first plane of the first prism module 102 in the first propagation direction. Then, after passing through the one or more first prisms of the first prism module 102, the first beam is emitted from the second plane of the first prism module 102, and continues to be propagated in the second propagation direction.

Alternatively, in another possible implementation, if a polarization direction of the first beam is perpendicular to an optical axis of any first prism in the first prism module 102, the polarization direction of the first beam may be adjusted by using the polarization adjuster 106. After being reduced by the beam diameter adjuster 107_2, the first beam is sent to the polarization adjuster 106. After the polarization adjuster 106 adjusts the polarization direction to not be perpendicular to the optical axis, the first beam is sent to the first prism module 102. The first beam may be incident on the first plane of the first prism module 102 in the first propagation direction. Then, after passing through the one or more first prisms of the first prism module 102, the first beam is emitted from the second plane of the first prism module 102, and continues to be propagated in the second propagation direction.

After being emitted from the second plane of the first prism module 102, the first beam is sent to the receiver 103. After receiving the first beam, the receiver 103 performs optical-to-electrical conversion to obtain an electrical signal. Then, the electrical signal is input to a signal processor (not shown in FIG. 13 and FIG. 14) for processing, to implement one or more functions such as target detection, distance measurement, speed measurement, target tracking, or imaging recognition.

In a possible implementation, for example, the first beam may be vertically emitted from the second plane of the first prism module 102. In other words, the second propagation direction is perpendicular to the second plane, and an emergent angle at which the first beam is emitted from the second plane is zero. In this implementation, the first beam is refracted once when being incident on the first plane. The first beam is incident to the first prism module 102, and after passing through the one or more first prisms in the first prism module 102, the first beam is not refracted when being emitted from the second plane. Alternatively, in another possible implementation, an angle at which the first beam is emitted from the second plane may be any angle greater than 0 and less than 90°. In this implementation, the first beam is refracted for the first time when being incident on the first plane. After passing through the one or more first prisms in the first prism module 102, the first beam is refracted for the second time when being emitted from the second plane. In other words, the first beam is refracted twice in a process in which the first beam passes through the first prism module 102.

In a possible implementation, when the first prism module 102 includes a plurality of first prisms, the plurality of first prisms may be properly placed, so that the first beam is vertically emitted from each first prism. For ease of understanding, FIG. 14 is used as an example for description. For example, in FIG. 14, the first beam is incident on the first plane in the first prism module 102, that is, is incident to the first prism 1021. The first beam is vertically emitted from the first prism 1021 after being refracted. The first beam emitted from the first prism 1021 is incident to the first prism 1022, and is vertically emitted from the first prism 1022 after being refracted. The first beam emitted from the first prism 1022 is incident to the first prism 1023, and is vertically emitted from the first prism 1023 after being refracted. For example, to enable the first beam to be vertically emitted from each of the plurality of first prisms, two-dimensional arrangement optimization may be performed on the plurality of first prisms. For example, a position and/or an angle of each first prism may be adjusted in a manner such as moving forward, moving backward, moving leftward, moving rightward, moving upward, or rotating downward. A placement position or an angle of each first prism is not limited in embodiments of this application.

Alternatively, in another possible implementation, an emergent angle at which the first beam is emitted from each of the plurality of first prisms may be any angle greater than 0 and less than 90°. In this implementation, the first beam is refracted once when being incident to each first prism, and is also refracted once when being emitted from each first prism. The emergent angle at which the first beam is emitted from each first prism may be set based on an actual application requirement. This is not limited in embodiments of this application.

In the foregoing implementation, the first prism module 102 compensates for an angle deviation of the propagation direction caused by the scanning module, so that optical energy of the echo beam received by the receiver can be increased, more information can be obtained, and detection accuracy can be improved.

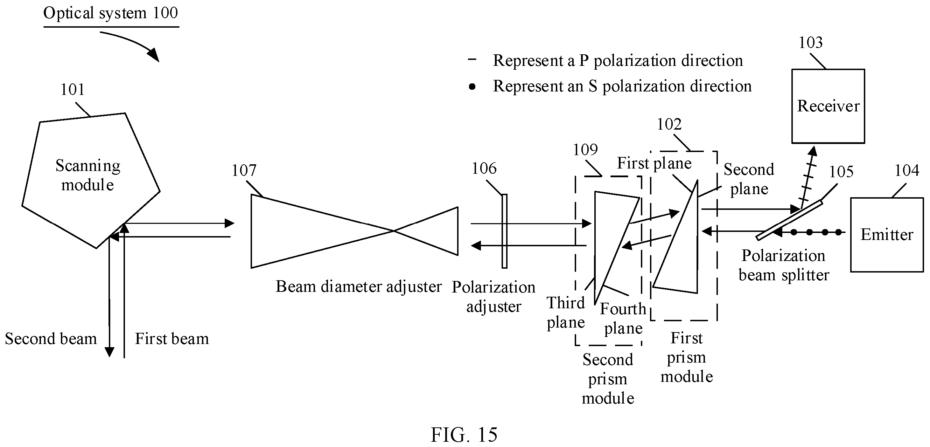

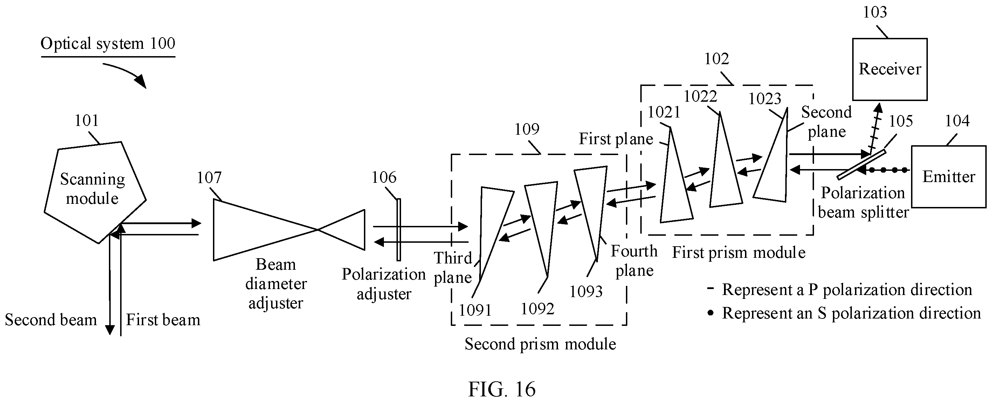

For example, a beam may be expanded or reduced through prism refraction, which is related to a material, a refractive index, and a wedge angle of a prism. In a possible implementation, a beam diameter is decreased after a beam passes through the first prism module 102. To reduce impact of the first prism module 102 on the beam diameter, the second prism module may be used to compensate for the beam diameter. For ease of understanding, refer to FIG. 15 and FIG. 16 as examples.

In FIG. 15, the optical system 100 shown in FIG. 11 is used as an example. In FIG. 16, the optical system 100 shown in FIG. 12 is used as an example. It can be learned that the optical system 100 further includes a second prism module 109. The second prism module 109 may include one second prism, for example, as shown in FIG. 15. Alternatively, for example, as shown in FIG. 16, the second prism module 109 may include a plurality of second prisms (for example, a second prism 1091, a second prism 1092, and a second prism 1093, where three prisms are used as an example). For example, the second prism may be, for example, an isotropic prism of glass or transparent plastic. For example, the second prism may be, for example, a wedge-shaped prism or a prism of another shape. In embodiments of this application, the wedge-shaped prism is mainly used as an example for description. For example, for refraction of a beam by the second prism, refer to the foregoing related descriptions of refraction of light by the isotropic wedge-shaped prism. Details are not described herein again.

For example, a shape and a size of the second prism may be the same as or different from a shape and a size of the first prism. For example, as shown in FIG. 15 or FIG. 16, a placement structure of the second prism module 109 may be considered as being obtained by replacing the first prism in the first prism module 102 with the second prism after the first prism module 102 is rotated leftward or rightward by 180°. For example, the second prism module 109 is disposed between the polarization adjuster 106 and the first prism module 102.

For example, a refractive index of the second prism for the first beam is the same as a refractive index of the first prism in the first prism module 102 for the first beam. Alternatively, for example, a deviation between a refractive index of the second prism to the first beam and a refractive index of the first prism in the first prism module 102 to the first beam is less than a preset threshold. The preset threshold may be set based on actual application. This is not limited in embodiments of this application.

For example, because a wedge angle of a prism also affects an diameter of a beam, a proper wedge angle of the second prism may be selected based on an actual application requirement during specific implementation. This is not limited in embodiments of this application.

For example, in the optical system 100 shown in FIG. 15 and FIG. 16, the first beam is sent to the second prism module 109 after passing through the polarization adjuster 106. An diameter of the first beam output after being refracted by the second prism module 109 is increased. For example, the first beam may be incident on a third plane (for example, a third plane of a second prism in FIG. 15, or a third plane of a second prism 1091 in FIG. 16) of the second prism module 109, and after passing through one or more second prisms, the first beam is emitted out of the second prism module 109 from a fourth plane (for example, a fourth plane of the second prism in FIG. 15, or a fourth plane of a second prism 1093 in FIG. 16). The third plane is an incident surface for the first beam, and the fourth plane is an emergent surface for the first beam.

Then, the first beam with an increased diameter is propagated to the first prism module 102. The diameter of the first beam passing through the first prism module 102 is reduced. In this structural design, a refractive index of the second prism for the first beam and a refractive index of the first prism for the first beam are the same or slightly differ, so that the second prism module 109 can compensate for a beam diameter reduced by the first prism module 102.

In a possible implementation, through cooperation between the second prism module 109 and the first prism module 102, a propagation direction of a beam emitted from the first prism module 102 may be further parallel to a propagation direction of a beam incident to the second prism module 109, or a deviation angle between a propagation direction of a beam emitted from the first prism module 102 and a propagation direction of a beam incident to the second prism module 109 is less than a preset angle threshold. The preset angle threshold may be set based on an actual situation. This is not limited in embodiments of this application.

For example, in the optical system 100 shown in FIG. 15 and FIG. 16, the second beam is sent to the first prism module 102 after passing through the polarization beam splitter 105. An diameter of the second beam output after being refracted by the first prism module 102 is reduced. Then, the second beam with the reduced diameter is propagated to the second prism module 109. For example, the second beam may be incident on a fourth plane (for example, a fourth plane of a second prism in FIG. 15, or a fourth plane of a second prism 1093 in FIG. 16) of the second prism module 109, and after the second beam passes through the one or more second prisms, the second prism module 109 is emitted out of the second prism module 109 from a third plane (for example, a third plane of the second prism in FIG. 15, or a third plane of a second prism 1091 in FIG. 16). The fourth plane is an incident surface for the second beam, and the third plane is an emergent surface for the second beam.

An diameter of the second beam passing through the second prism module 109 is increased. In this structural design, a refractive index of the second prism for the second beam and a refractive index of the first prism for the second beam are the same or slightly differ, so that the second prism module 109 can compensate for a beam diameter reduced by the first prism module 102.

In a possible implementation, through cooperation between the second prism module 109 and the first prism module 102, a propagation direction of a beam emitted from the second prism module 109 may be parallel to a propagation direction of a beam incident to the first prism module 102, or a deviation angle between a propagation direction of a beam emitted from the second prism module 109 and a beam incident to the first prism module 102 is less than a preset angle threshold. The preset angle threshold may be set based on an actual situation. This is not limited in embodiments of this application.

An embodiment of this application further provides a detection apparatus. The detection apparatus includes the optical system 100 in any one of the foregoing possible embodiments.

An embodiment of this application further provides a terminal. The terminal includes the optical system 100 in any one of the foregoing possible embodiments. Alternatively, the terminal includes the foregoing detection apparatus.

For example, the terminal may be an intelligent terminal or a transportation means such as a vehicle, an uncrewed aerial vehicle, or a robot. Certainly, the terminal may alternatively be replaced with an industrial device, an entertainment device, or the like. The intelligent terminal is, for example, a mobile phone, a tablet computer, a notebook computer, a smart band, a smart watch, or smart glasses. The transportation means is, for example, a vehicle, a ship, an aircraft, or a logistics robot. The industrial device is, for example, an industrial robot or a robotic arm. The entertainment device is, for example, a virtual reality (virtual reality, VR) device, a mixed reality (mixed reality, MR) device, a massage chair, or a 4D cinema cockpit. A device to which an electrical connector is applied is not strictly limited in this application.

In conclusion, the optical system, the detection apparatus, and the terminal provided in this application can compensate for a deviation angle of a propagation direction of an echo beam, and optimize detection accuracy.

It should be understood that sequence numbers of processes do not mean execution sequences in embodiments of this application. The execution sequences of the processes shall be determined based on functions and internal logic of the processes, and should not constitute any limitation on implementation processes of embodiments of this application.

It should be further understood that the term "include" (also referred to as "includes", "including", "comprises", and/or "comprising") used in this specification specifies presence of the stated features, integers, steps, operations, elements, and/or components, but do not preclude the presence or addition of one or more other features, integers, steps, operations, elements, components, and/or groups thereof.

It should further be understood that "one embodiment", "an embodiment", and "a possible implementation" mentioned throughout the specification mean that a specific feature, structure, or characteristic related to the embodiment or an implementation is included in at least one embodiment of this application. Therefore, "in one embodiment" or "in an embodiment" or "a possible implementation" appearing throughout the specification may not necessarily refer to a same embodiment. In addition, these particular features, structures, or characteristics may be combined in one or more embodiments in any appropriate manner.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. An optical system, wherein the optical system comprises a scanning module, a first prism module, and a receiver, the first prism module comprises one or more first prisms, and the first prism module comprises a first incident surface and a first emergent surface;
the scanning module is configured to reflect a first beam, wherein the first beam comprises a beam reflected or scattered by an object;
the first prism module is configured to adjust a propagation direction of the first beam reflected by the scanning module, wherein the first beam is incident on the first incident surface at a first incident angle, and is emitted from the first emergent surface, and a refractive index of the first beam in the one or more first prisms is related to the first incident angle; and
the receiver is configured to receive the first beam emitted from the first prism module.

2. The optical system according to claim 1, wherein the first prism is an anisotropic crystal prism.

3. The optical system according to claim 1 or 2, wherein a polarization direction of the first beam is not perpendicular to an optical axis of the first prism.

4. The optical system according to any one of claims 1 to 3, wherein refraction generated after the first beam is incident on the first incident surface is refraction of extraordinary light.

5. The optical system according to any one of claims 1 to 4, wherein when the scanning module is configured to reflect the first beam at different scanning angles, the receiver receives the first beam emitted from the first prism module.

6. The optical system according to any one of claims 1 to 5, wherein the receiver comprises a receiving optical fiber and a detector.

7. The optical system according to any one of claims 1 to 6, wherein if the first prism module comprises one first prism, the first incident surface and the first emergent surface belong to a plane or a curved surface of the first prism; or
if the first prism module comprises a plurality of first prisms, the first incident surface belongs to a plane or a curved surface of one first prism in the plurality of first prisms, the first emergent surface belongs to a plane or a curved surface of another first prism in the plurality of first prisms, and the first beam passes through the plurality of first prisms.

8. The optical system according to any one of claims 1 to 7, wherein the optical system further comprises a second prism module, the second prism module is configured to expand an diameter of the first beam, and the second prism module comprises one or more second prisms; and
the second prism module comprises a second incident surface and a second emergent surface, the first beam reflected by the scanning module is incident on the second incident surface, is emitted from the second emergent surface, and then is incident to the first prism module from the first incident surface at the first incident angle, and an diameter of the first beam emitted from the second emergent surface is greater than an diameter of the first beam incident on the second incident surface.

9. The optical system according to claim 8, wherein a refractive index of the first beam in the one or more second prisms is the same as the refractive index of the first beam in the one or more first prisms; or
a deviation between a refractive index of the first beam in the one or more second prisms and the refractive index of the first beam in the one or more first prisms is less than a preset threshold.

10. The optical system according to claim 8 or 9, wherein the second prism is an isotropic prism of glass or transparent plastic.

11. The optical system according to any one of claims 1 to 10, wherein the optical system further comprises a polarization adjuster, and the polarization adjuster is configured to adjust the polarization direction of the first beam to a first polarization direction; and
the first beam incident on the first incident surface is a beam whose polarization direction is adjusted by the polarization adjuster.

12. The optical system according to claim 11, wherein the polarization adjuster is a quarter-wave plate or a half-wave plate.

13. The optical system according to any one of claims 1 to 12, wherein the optical system further comprises a beam diameter adjuster, and the beam diameter adjuster is configured to reduce the diameter of the first beam; and
the first beam incident to the first prism module is a beam whose diameter is reduced by the beam diameter adjuster.

14. The optical system according to claim 13, wherein the beam diameter adjuster comprises a Kepler beam expansion/reduction system or a Galileo beam expansion/reduction system.

15. The optical system according to any one of claims 1 to 14, wherein the optical system further comprises a polarization beam splitter, and the polarization beam splitter is configured to reflect the first beam in a first polarization direction to the receiver.

16. The optical system according to any one of claims 1 to 15, wherein the optical system further comprises a reflector, and the reflector is configured to reflect the first beam reflected from the scanning module, so that the first beam is propagated in a direction in which the first prism module is located.

17. The optical system according to any one of claims 1 to 16, wherein the first beam is emitted from the first emergent surface at a first emergent angle;
the optical system further comprises an emitter, configured to emit a second beam, wherein the first emergent surface is an incident surface for the second beam, and the first incident surface is an emergent surface for the second beam;
the first prism module is further configured to adjust a propagation direction of the second beam, wherein the second beam is incident on the first emergent surface at a second incident angle, and is emitted from the first incident surface; and
the second incident angle is the same as the first emergent angle, or an angle deviation between the second incident angle and the first emergent angle is less than an angle threshold.

18. The optical system according to claim 17, wherein a polarization direction of the second beam is perpendicular to the polarization direction of the first beam.

19. The optical system according to any one of claims 1 to 18, wherein the first beam is emitted from the first emergent surface at an emergent angle of 90°.

20. A detection apparatus, wherein the detection apparatus comprises the optical system according to any one of claims 1 to 19.

21. A terminal, wherein the terminal comprises the optical system according to any one of claims 1 to 19, or comprises the detection apparatus according to claim 20.
